# EUROPEAN PATENT APPLICATION

(11) **EP 4 385 703 A1**
(43) Date of publication of application: **19.06.2024**
(21) Application number: 22855825.0
(22) Date of filing: 03.08.2022
(51) Int. Cl.: B29C 45/14, C08K 3/013, C08K 3/40, C08K 7/14, C08L 23/08, C08L 23/26, C08L 63/00, C08L 81/02

(54) **METAL MEMBER-POLYARYLENE SULFIDE MEMBER COMPLEX AND PRODUCTION METHOD THEREFOR**

(30) Priority: 11.08.2021 JP 2021131056; 11.08.2021 JP 2021131059
(71) Applicant: Tosoh Corporation, Yamaguchi 746-8501 (JP)
(72) Inventor: HARUNARI Takeshi, Yokkaichi-shi Mie 510-8540 (JP)
(74) Representative: Vossius & Partner Patentanwälte Rechtsanwälte mbB
(86) International application number: PCT/JP2022/029758
(87) International publication number: WO 2023/017762

(57) **Abstract**

A metal member-polyarylene sulfide resin member composite having an air-tight joint between the metal member and the polyarylene sulfide resin member and a method for its production are provided. A metal member- polyarylene sulfide resin member composite comprising a metal member and a polyarylene sulfide member which is obtained by injection molded direct joining, wherein the polyarylene sulfide member is made of a polyarylene sulfide resin composition which satisfies all of the following (1) to (3): (1) it has a melt crystallization peak temperature of at least 200°C and at most 230°C, (2) it has an MFR of at least 20 g/10 minutes and at most 150 g/10 minutes, and (3) it comprises 100 parts by weight of a polyarylene sulfide resin (A), from 5 to 25 parts by weight of a modified ethylene copolymer (B) and from 10 to 120 parts by weight of glass fiber (C).

## Description

### TECHNICAL FIELD

The present invention relates to a metal member-polyarylene sulfide member composite with an air-tight joint and a method for its production, particularly to a lightweight and impact-resistant metal member-polyarylene sulfide member composite with an air-tight joint between the metal member and the polyarylene sulfide member which is suited to mass production and useful for making parts of transport vehicles such as automobiles and airplanes and waterproof electric and electronic parts of mobile devices and the like and a method for producing such a metal member-polyarylene sulfide member composite.

### BACKGROUND ART

In an effort to lighten parts of transport vehicles such as automobiles and airplanes, replacement of some metals by resins has been studied. As a technique for combining a resin and a metal, direct integration of a metal member having a physically and/or chemically treated surface placed as an insert in a mold into a resin by injection molding (hereinafter referred to as insert injection molding) has been attracting attention in terms of mass productivity, reduction in the number of necessary parts, cost, freedom in parts design and environmental burdens and is proposed for manufacturing of mobile electronic devices such as smartphones (Patent Documents 1 to 3).

Polyarylene sulfide (hereinafter abbreviated as PAS), typified by poly(p-phenylene sulfide (hereinafter referred to as PPS), has excellent mechanical strength, heat characteristics, electrical characteristics and chemical resistance and is widely used in many electric and electronic equipment members and automobile equipment members and office automation equipment members.

PAS also has good melt fluidity and adheres strongly to a metal member having a physically and/or chemically treated surface upon insert injection molding.

A resin composition with good dimensional stability and thin-wall fluidity, comprising an amino-containing PPS having a specific melt viscosity and a specific crystallization temperature, a fiber filler, a particle filler, an ethylene copolymer, a mold release agent and the like is proposed (Patent Document 4).

As a polyarylene sulfide resin composition having good moldability and mechanical strength for making a box-shaped molded article having a flat bottom with a small dimensional fluctuations by injection molding, a polyarylene sulfide resin composition comprising a polyarylene sulfide resin having a specific melt viscosity and a specific crystallization temperature and an inorganic filler comprising a fiber filler and a non-fiber filler is proposed (Patent Document 5).

As a result of the search so far for PAS resin compositions which adhere to metals strongly, a resin composition comprising (a) PAS, (b) a polyethylene copolymer having a polar group and (c) a triazinethiol (Patent Document 6) and a resin composition comprising (a) PPS, (b) a polyolefin having a polar group and (c) a compatibilizer (Patent Document 7) are proposed.

A metal-resin composite structure with an air-tight joint between the metal and the resin is also proposed (Patent Document 8).

PAS improves greatly in mechanical strength, heat resistance and stiffness when filled with inorganic fibers such as glass fiber or inorganic particles such as calcium carbonate and talc. However, molded products of fiber-filled PAS tend to warp, and hence PAS has limited use in making electric or electronic parts such as housings of mobile devices of smartphones and tablet PCs or automobile parts. In these application areas, because of a call for smaller parts having more complicated shapes, parts having thinner walls are increasingly used. Therefore, suppression of warpage of parts having thin walls is desired.

To suppress warpage of PAS products, a PPS resin composition comprising PPS, glass flake, an inorganic filler other than the glass flake and an olefin resin (Patent Document 9), a polyphenylene sulfide resin composition comprising PPS, glass fiber, an olefin polymer having a particular functional group, an epoxy resin and glass flake and/or calcium carbonate (Patent Document 10), a polyarylene sulfide resin composition comprising PPS, a modified ethylene copolymer, glass fiber having a cross-section with an aspect ratio of from 2 to 4 and an ultraviolet absorber (Patent Document 11) have been proposed.

As resin compositions which can provide molded products having a flat surface with small dimensional fluctuations by injection molding, polyarylene sulfide resin compositions comprising a PPS having a specific melt viscosity and a specific crystallization temperature, a fiber filler and a non-fiber filler are proposed (Patent Documents 12 and 13).

As resin compositions having good adhesion to epoxy resins, a polyarylene sulfide composition comprising PPS, a polyethylene copolymer, a modified polysiloxane compound and an epoxy resin (Patent Document 14), a polyarylene sulfide composition comprising PPS, a polyethylene copolymer and a silane compound having a ketimine structure (Patent Document 15), and a polyarylene sulfide composition comprising PPS, a polyethylene copolymer having a polar group and at least one coupling agent selected from organic titanates and organic aluminates (Patent Document 16) are proposed.

As a resin composition with good dimensional stability and thin-wall fluidity, a polyarylene sulfide resin composition comprising an amino-containing PPS having a specific melt viscosity and a specific crystallization temperature, a fiber filler, a particle filler, an ethylene copolymer and a mold release agent is proposed (Patent Document 17).

As a metal-resin composite molded product with high bond strength between a metal insert member and a resin member, a metal-resin composite molded product comprising a metal insert member having a physically and/or chemically treated surface and a resin member made of a resin composition comprising PPS, a non-fiber inorganic filler selected from the group consisting of silica particles and glass beads and an olefin copolymer containing an epoxy group is proposed (Patent Document 18).

### PRIOR ART DOCUMENTS

### PATENT DOCUMENTS

| | |
|---|---|
| Patent Document 1: | Japanese Patent No. 5701414 |
| Patent Document 2: | Japanese Patent No. 5714193 |
| Patent Document 3: | Japanese Patent No. 4020957 |
| Patent Document 4: | JP-A-2011-16942 |
| Patent Document 5: | Japanese Patent No. 4777080 |
| Patent Document 6: | JP-A-2010-070712 |
| Patent Document 7: | JP-A-2010-284899 |
| Patent Document 8: | JP-A-2020-68070 |
| Patent Document 9: | JP-A-2002-129014 |
| Patent Document 10: | JP-A-2005-306926 |
| Patent Document 11: | Japanese Patent No. 6543965 |
| Patent Document 12: | JP-A-2007-204615 |
| Patent Document 13: | JP-A-2007-204616 |
| Patent Document 14: | JP-A-2008-144002 |
| Patent Document 15: | JP-A-2009-126884 |
| Patent Document 16: | JP-A-2009-143991 |
| Patent Document 17: | JP-A-2011-016942 |
| Patent Document 18: | Japanese Patent No. 6132669 |

### DISCLOSURE OF INVENTION

### TECHNICAL PROBLEM

In Patent Documents 1 to 3, the adhesion at the metal-resin joint in a metal member-resin member composite obtained by insert injection molding as proposed therein is evaluated by the bond strength between the metal member and the resin member, but a metal-resin joint with high bond strength is not necessarily a good air-tight joint. Besides, these documents give no weight to the warpage of composites obtained as proposed therein, and composites obtained as proposed therein can have a potential problem. The resin composition proposed in Patent Document 4 comprising a PPS having a specific melt viscosity and a specific crystallization temperature can provide a composite member with a metal member, having good mold release, dimensional stability and cold/heat resistance by insert molding. However, in Patent Document 4, the melt viscosity and the crystallization temperature of the resin composition to be actually bonded to the metal member by insert injection molding are not discussed at all, and the composition may have a problem that composite members with insufficient air-tightness may be obtained. The resin composition proposed in Patent Document 5 may have a potential problem when it is combined with a metal member having a physically and/or chemically treated surface to make a composite because Patent Document 5 gives no weight to the bond strength or air-tightness of the joint in such a composite. The resin compositions proposed in Patent Documents 6 and 7 may have a potential problem when they are combined with a metal member having a physically and/or chemically treated surface to make a composite because Patent Documents 6 and 7 give no weight to the bond strength or air-tightness of the joint in such a composite. The cooling apparatus and battery structure proposed in Patent Document 8 are highly air-tight, but the mechanism of the high air-tightness is not clear, and it is desired to quantify the mechanism.

The resin compositions proposed in Patent Documents 9, 10 and 12 to 16 may have a potential problem when they are combined with a metal member having a physically and/or chemically treated surface to make a composite because these documents give no weight to the bond strength or air-tightness of the joint in such a composite. The resin composition proposed in Patent Document 11 has the problem that it may be insufficient in terms of the air-tightness between a resin member and a metal member and warpage. The resin composition proposed in Patent Document 14 comprising a PPS having a specific melt viscosity and a specific crystallization temperature can provide a composite member with a metal member, having good mold release, dimensional stability and cold/heat resistance by insert molding. However, in Patent Document 14, the melt viscosity and the crystallization temperature of the resin composition to be actually bonded to the metal member by insert injection molding are not discussed at all, and the composition may have a problem that composite members with insufficient air-tightness may be obtained. The resin compositions proposed in Patent Documents 11 and 17 have the problem that they may be insufficient in terms of adhesion between a resin member and a metal member and warpage.

The metal-resin composite molded product proposed in Patent Document 18 may have a potential problem because Patent Document 18 gives no weight to warpage.

The present invention relates to a metal member-PAS member composite having excellent air-tightness between the metal member and the PAS member, a method for stably producing a metal member-PAS member composite having excellent air-tightness and a metal member-PAS member composite with low warpage and an air-tight joint, and aims at providing a metal member-PAS member composite useful for making parts of transport vehicles such as automobiles and airplanes and waterproof electric and electronic parts of mobile devices and the like.

### SOLUTION TO PROBLEM

As a result of their extensive study to solve the above-mentioned problems, the present inventors found that a metal member-PAS member composite comprising a PAS member made of a composition which comprises at least PAS, a modified ethylene copolymer and glass fiber in a specific ratio and has a specific melt crystallization peak temperature and a specific melt viscosity, and a metal member has high joint air-tightness, and that a metal member-PAS member composite comprising a PAS member made of a composition which comprises at least PAS, a modified ethylene copolymer, an epoxy resin, glass fiber and glass flake and has a specific melt crystallization peak temperature and a specific melt viscosity, and a metal member has low warpage and an air-tight joint, and accomplished the present invention.

Namely, the present invention provides the following [1] to [7].
[1] A metal member-PAS member composite which comprises a metal member and a PAS member and is obtained by injection molded direct joining, wherein the PAS member is formed by injection molding of a PAS composition which satisfies all of the following (1) to (3):
   (1); in differential scanning calorimetry (DSC) during cooling from 330°C to 150°C at a rate of 20°C/min after heating from 23°C to 330°C and heating at 330°C for 5 minutes, the PAS composition has a melt crystallization peak temperature of at least 200°C and at most 230°C,
   (2); the PAS composition has a melt flow rate (MFR) of at least 20 g/10 minutes and at most 150 g/10 minutes, as measured at 315°C in accordance with ISO 1133, and
   (3); the PAS composition comprises 100 parts by weight of a PAS (A), from 5 to 25 parts by weight of at least one modified ethylene copolymer (B) selected from the group consisting of a copolymer of ethylene, an alkyl ester of an α,β-unsaturated carboxylic acid and maleic anhydride, a copolymer of ethylene and a glycidyl ester of an α,β-unsaturated carboxylic acid, a copolymer of ethylene, a glycidyl ester of an α,β-unsaturated carboxylic acid and vinyl acetate, a copolymer of ethylene, a glycidyl ester of an α,β-unsaturated carboxylic acid and an alkyl ester of an α,β-unsaturated carboxylic acid, and a modified copolymer of ethylene and an α-olefin grafted with maleic anhydride, and from 10 to 120 parts by weight of glass fiber (C).
[2] The metal member-PAS member composite according to [1], wherein the PAS composition further comprises at least one mold release agent (D) selected from the group consisting of a polyethylene wax, a polypropylene wax and a fatty amide wax.
[3] The metal member-PAS member composite according to [1] or [2], wherein the PAS composition further comprises an epoxy resin (E).
[4] The metal member-PAS member composite according to any one of [1] to [3], wherein the PAS composition further comprises glass flake (F).
[5] The metal member-PAS member composite according to [4], wherein in the PAS composition, the ratio (by weight) of glass fiber (C) / glass flake (F) in the PAS composition is 1/4 to 4/1, and the total amount of the glass fiber (C) and the glass flake (F) is from 40 to 150 parts by weight per 100 parts by weight of the PAS (A).
[6] The metal member-PAS member composite according to any one of [1] to [5], wherein the metal member has a chemically or physically treated surface.
[7] A method for producing the metal member-PAS member composite as defined in any one of [1] to [6], by direct integration of the metal member and the PAS member by injection molding, which comprises placing the metal member in a mold at a mold temperature of at least 130°C, and injecting a melt of the PAS composition into the mold under a mold holding pressure of at least 1 MPa to directly produce a composite comprising the metal member and a PAS member joined by injection molded direct joining.

### ADVANTAGEOUS EFFECTS OF INVENTION

The present invention provides a reliable lightweight and impact-resistant metal member-PAS member composite having good joint air-tightness which is suited to mass production and useful for making parts of transport vehicles such as automobiles and airplanes and waterproof electric and electronic parts of mobile devices and the like and a method for producing such a metal member-PAS member composite, and has high industrial value.

### BRIEF DESCRIPTION OF DRAWINGS

[Fig. 1]; A schematic view of the container used to evaluate air-tightness in the Examples.
[Fig. 2]; A schematic view of the lid of the container used for evaluation of air-tightness.
[Fig. 3]; A schematic view of a metal member used for evaluation of air-tightness.
[Fig. 4]; A schematic view of a PAS member used for evaluation of air-tightness.

### DESCRIPTION OF EMBODIMENTS

Now, the present invention will be described in detail.

The metal member-PAS member composite of the present invention is obtained by injection molded direct joining of a metal member and a PAS member.

The PAS composition which constitutes the PAS member has a melt crystallization peak temperature (hereinafter referred to as a melt crystallization temperature or Tc2) of at least 200°C and at most 230°C in differential scanning calorimetry (hereinafter referred to as DSC) during cooling from 330°C to 150°C at a rate of 20°C/min after heating from 23°C to 330°C and heating at 330°C for 5 minutes, and can provide a good air-tight metal member-PAS member composite. If a PAS composition having a Tc2 below 200°C is used, metal member-PAS member composites cannot be produced efficiently by injection molding due to poor mold release. If a PAS composition having a Tc2 above 230°C is used, the resulting metal member-PAS member composite has poor air-tightness due to insufficient adhesion between the metal member and the PAS member.

In the metal member-PAS member composite of the present invention, the metal member and the PAS member are bonded together strongly upon insert molding, and in the injection molding process, the melt of a PAS composition injected into a mold replicates the fine surface irregularities on the metal member in the mold, producing an anchor effect. Thus, it is important that the melt of the PAS composition replicates the surface irregularities on the metal member reliably as it solidifies, and it is necessary that the PAS composition solidifies at a proper speed. When the PAS composition solidifies too fast, because the composition solidifies before it fills the surface irregularities on the metal member, leaving spaces called voids between the metal member surface and the resin member, the resulting metal member-PAS member composite has poor air-tightness. When the PAS composition solidifies too slow, composites cannot be produced efficiently due to poor moldability of the composition. Therefore, if the PAS member has a Tc2 below 200°C, composites cannot be produced efficiently due to poor mold release resulting from too slow solidification. If the PAS member has a Tc2 above 230°C, because the PAS composition solidifies too fast, the resulting metal member-PAS member composite has poor air-tightness due to insufficient adhesion between the metal member and the PAS member. In the present invention, because the PAS member has a Tc2 of at least 200°C and at most 230°C, which is distinctively lower than Tc2 of ordinary PAS, it is possible to control the solidification speed from the molten state and produce air-tight composites efficiently.

Because the PAS member is formed from the PAS composition having a MFR of at least 20 g/10 minutes and at most 150 g/10 minutes, as measured at 315°C in accordance with ISO 1133, the resulting metal member-PAS member composite has good joint air-tightness. If a PAS composition having a MFR below 20 g/10 minutes is used, the composition is not sufficiently fluid to fill the surface irregularities on the metal member efficiently, metal member-PAS member composites having poor air-tightness are obtained due to insufficient adhesion between the metal member and the PAS member. On the other hand, insert injection molding of a PAS composition having a MFR above 150 g/10 minutes can be difficult because it is likely to drool out. In the present invention, because the PAS member has specific fluidity corresponding to a MFR of at least 20 g/10 minutes and at most 150 g/10 minutes, the metal member-PAS member composite of the present invention is produced with good moldability and hence is good air-tight.

In the present invention, air-tightness means no leakage of water, water vapor, organic solvents such as acetone, ethanol, dimethylformamide, tetrahydrofuran, ethyl acetate and ammonia; various vehicle fluids such as automatic transmission fluid, longlife coolant, battery fluid, engine oil, gasoline, diesel oil, gear oil, brake oil and silicone oil; gases such as helium, hydrogen, oxygen, nitrogen, air, carbon dioxide, ozone, methane, carbon monoxide, liquefied petroleum gas, hydrogen peroxide and hydrogen fluoride, battery electrolytes and the like, from the joint between the metal member and the PAS member. For assessment of air-tightness, an appropriate method such as the helium leak test described in JP-A-2020-68070 may be chosen according to the use and purpose.

The PAS member in the metal member-PAS member composite of the present invention comprises 100 parts by weight of a PAS (A), from 5 to 25 parts by weight of at least one modified ethylene copolymer (B) selected from the group consisting of a copolymer of ethylene, an alkyl ester of an α,β-unsaturated carboxylic acid and maleic anhydride, a copolymer of ethylene and a glycidyl ester of an α,β-unsaturated carboxylic acid, a copolymer of ethylene, a glycidyl ester of an α,β-unsaturated carboxylic acid and vinyl acetate, a copolymer of ethylene, a glycidyl ester of an α,β-unsaturated carboxylic acid and an alkyl ester of an α,β-unsaturated carboxylic acid, and a modified copolymer of ethylene and an α-olefin grafted with maleic anhydride, and from 10 to 120 parts by weight of glass fiber (C). The PAS (A) may be any polymer which generally falls under the category of PAS and may be a homopolymer or copolymer consisting of p-phenylene sulfide units, m-phenylene sulfide units, o-phenylene sulfide units, phenylene sulfide sulfone units, phenylene sulfide ketone units, phenylene sulfide ether units and/or biphenylene sulfide units. Specific examples of such a PAS include PPS, polyphenylene sulfide sulfone, polyphenylene sulfide ketone, polyphenylene sulfide ether and the like, and among them, PPS is preferred particularly to make a PAS member having excellent heat resistance and strength characteristics.

The PAS (A) is preferably a PAS having a melt viscosity of from 90 to 2000 poises as measured with a Koka flowtester equipped with a 2 mm-long die having a diameter of 1 mm at 315°C under a load of 10 kg, in order to produce a metal member-PAS member composite having an air-tight joint efficiently.

The PAS (A) may be produced by a known process for producing a PAS, for example, by polymerizing an alkali metal sulfide and a polyhalogenated aromatic compound in a polar solvent. The polar solvent may, for example, be N-methyl-2-pyrrolidone, N-ethyl-2-pyrrolidone, cyclohexylpyrrolidone, dimethylformamide or dimethylacetamide, and the alkali metal sulfide may, for example, be an anhydride or hydrate of sodium sulfide, rubidium sulfide or lithium sulfide and may be a reaction product of an alkali metal hydrogen sulfide and an alkali metal hydroxide. The polyhalogenated aromatic compound may, for example, be p-dichlorobenzene, p-dibromobenzene, p-diiodobenzene, m-dichlorobenzene, m-dibromobenzene, m-diiodobenzene, 4,4'-dichlorodiphenyl sulfone, 4,4'-dichlorobenzophenone, 4,4'-dichlorodiphenyl ether, 4,4'-dichlorobiphenyl or the like.

The PAS (A) may be a linear polymer, a polymer having a crosslinked or branched structure introduced by adding a small amount of a polyhalogenated compound having at least 3 halogen atoms at the time of polymerization, a polymer having a PAS chain partially and/or terminally modified with a functional group such as a carboxyl group, a metal carboxylate, an alkyl group, an alkoxy group, an amino group or a nitro group, or a polymer obtained by heating in a nonoxidizing inert gas such as nitrogen, or may be a mixture of these PAS's. The PAS (A) may be washed with an acid, hot water or an organic solvent such as acetone or methyl alcohol to remove impurities such as sodium atoms, PAS oligomers, sodium chloride and sodium 4-(N-methylchlorophenylamino)butanoate.

The PAS member in the metal member-PAS member composite of the present invention comprises from 5 to 25 parts by weight of at least one modified ethylene copolymer (B) selected from the group consisting of a copolymer of ethylene, an alkyl ester of an α,β-unsaturated carboxylic acid and maleic anhydride, a copolymer of ethylene and a glycidyl ester of an α,β-unsaturated carboxylic acid, a copolymer of ethylene, a glycidyl ester of an α,β-unsaturated carboxylic acid and vinyl acetate, a copolymer of ethylene, a glycidyl ester of an α,β-unsaturated carboxylic acid and an alkyl ester of an α,β-unsaturated carboxylic acid, and a modified copolymer of ethylene and an α-olefin grafted with maleic anhydride, per 100 parts by weight of the PAS (A). If the amount of the modified ethylene copolymer (B) is less than 5 parts by weight, metal member-PAS member composites having poor joint air-tightness are obtained. On the other hand, if the amount of the modified ethylene copolymer (B) exceeds 25 parts by weight, metal member-PAS member composites having poor joint air-tightness are obtained with unfavorable gas generation and remarkable mold pollution during insert injection molding.

The PAS member in the metal member-PAS member composite of the present invention comprises from 10 to 120 parts by weight of glass fiber (C) per 100 parts by weight of the PAS (A), in order to produce mechanically strong metal member-PAS member composites efficiently. The glass fiber (C) may be anything that is generally called glass fiber. Specific examples of the glass fiber (C) include glass fibers such as chopped strands having an average diameter of from 6 to 14 µm, chopped strands of flat glass fiber having a cross section having an aspect ratio of from 2 to 4, milled fiber and a roving; silane fiber; aluminosilicate glass fiber; hollow glass fiber; non-hollow glass fiber and the like. Among them, chopped strands having an average diameter of from 6 to 14 µm and chopped strands of flat glass fiber having a cross section having an aspect ratio of from 2 to 4 are preferred in order to produce metal member-PAS member composites having good impact resistance and less joint defects. Two or more species of glass fiber may be used in combination, and if necessary, the surface of the glass fiber (C) may be treated with a functional compound such as an isocyanate compound, a silane compound or a titanate compound or a polymer, before use.

If the amount of the glass fiber (C) is less than 10 parts by weight, metal member-PAS member composites with poor mechanical strength and impact resistance are obtained. If the amount of the glass fiber (C) exceeds 120 parts by weight, the PAS composition has poor fluidity, and metal member-PAS member composites having poor joint air-tightness are obtained.

The PAS member may comprise a mold release agent (D) to facilitate separation of the molded product from the mold and improve the appearance of the molded product. The mold release agent (D) is preferably a polyethylene wax, a polypropylene wax or a fatty amide wax. Commercially available polyethylene wax and polypropylene wax may be used. The fatty acid amide wax may be any polycondensate of a higher aliphatic monocarboxylic acid, a polybasic acid and a diamine as long as it falls under this category, and may, for example, be Light Amide WH-255 (trade name) (manufactured by Kyoeisha Chemical Co., Ltd.), which is a polycondensate of stearic acid, sebacic acid and ethylenediamine.

The PAS member may comprise an epoxy resin (E) in order to produce an air-tight metal member-PAS member composite. The epoxy resin (E) may be any epoxy resin that falls under the category of epoxy resin, such as glycidyl-containing epoxy resins including glycidyl ether epoxy resins synthesized from a compound having two or more hydroxyl groups in the molecule such as 2,2-bis(4'-hydroxyphenyl)propane (bisphenol A), bis(2-hydroxyphenyl)methane (bisphenol F), 4,4'-dihydroxydiphenylsulfone (bisphenol S), 4,4'-dihydroxybiphenyl, resorcin, saligenin, trihydroxydiphenyldimethylmethane, tetraphenylolethane, halogenated or alkylated products thereof, butanediol, ethylene glycol, erythrite, novolac, glycerin and polyoxyalkylene and epichlorohydrin; glycidyl ester epoxy resins synthesized from such a compound having two or more hydroxyl groups in the molecule and glycidyl phthalate; and glycidylamine epoxy resins synthesized from a primary or secondary amine such as aniline, diaminodiphenylmethane, methaxylenediamine and 1,3-bisaminomethylcyclohexane and epichlorohydrin, and epoxy resins having no glycidyl groups including epoxidized soybean oil, epoxidized polyolefin, vinylcyclohexene dioxide and dicyclopentadiene dioxide. Among them, bisphenol epoxy resins such as glycidyl ether epoxy resins and glycidyl ester epoxy resins obtained from bisphenols such as bisphenol A, bisphenol F and bisphenol S, and are preferred in order to produce good air-tight metal member-PAS member composites. More preferred are bisphenol A epoxy resins. The amount of the epoxy resin (E) is preferably from 1 to 15 parts by weight per 100 parts by weight of the PAS (A).

The PAS member in the metal member-PAS member composite preferably comprises glass flake (F) in order to mechanically strong metal member-PAS member composites efficiently. Especially, it is preferred that the PAS member comprises glass fiber (C) and glass flake (F) in a total amount of from 40 to 150 parts by weight, per 100 parts by weight of the PAS (A), and the ratio (by weight) of glass fiber (C) / glass flake (F) is 1/4 to 4/1 to produce metal member-PAS member composites with low warpage.

The glass flake (F) is usually scale-like glass particles having an average thickness of from 2 to 5 µm and an average diameter of from 10 to 4000 µm and are classified as alkali-containing C glass or alkali-free E glass. The glass flake (F) preferably has an average diameter of from 100 to 1000 µm in order to produce metal member-PAS member composites with low warpage.

The PAS member may comprise carbon fibers; whiskers such as silicon nitride whiskers, basic magnesium sulfate whiskers, barium titanate whiskers, potassium titanate whiskers, silicon carbide whiskers, boron whiskers and zinc oxide whiskers; inorganic fibers such as rock wool, zirconia, barium titanate, silicon carbide, silica and blast furnace slag; organic fibers such as aramid fibers, phenol resin fibers and arylate fibers; or mineral fibers such as wollastonite and magnesium oxysulfate fibers, in such an amount that they do not spoil the effects of the present invention, and may comprise calcium carbonate, lithium carbonate, magnesium carbonate, zinc carbonate, mica, silica, talc, clay, calcium sulfate, kaolin, wollastonite, zeolite, silicon oxide, magnesium oxide, zirconium oxide, tin oxide, magnesium silicate, calcium silicate, calcium phosphate, magnesium phosphate, hydrotalcite, glass powder or glass balloons in such an amount that they do not spoil the effects of the present invention.

The PAS member may comprise at least one ordinary additive such as a conventionally known plasticizer like a polyalkylene oxide oligomer compound, a thioether compound, an ester compound or an organic phosphorus compound; an antioxidant; a heat stabilizer; a lubricant; or a blowing agent. in such an amount that they do not spoil the effects of the present invention.

The PAS member may comprise at least one thermosetting or thermoplastic resin such as a cyanate ester resin, a phenolic resin, polyimide, a silicone resin, polyester, polyamide, polyphenylene oxide, polycarbonate, polysulfone, polyetherimide, polyether sulfone, polyether ketone, polyether ether ketone, polyamide imide, polyamide elastomer, polyester elastomer or polyalkylene oxide, as long as it does not go beyond what the present invention intends.

The metal member in the metal member-PAS member composite of the present invention may be made of any material as long as it falls under the category of metal member, and is preferably an aluminum member, an aluminum alloy member, a copper member, a copper alloy member, a magnesium member, a magnesium alloy member, an iron member, a titanium member, a titanium alloy member or a stainless steel member, preferably a lightweight metal member such as an aluminum member, an aluminum alloy member, a magnesium member, a magnesium alloy member, a titanium member, a titanium alloy member, more preferably an aluminum member or an aluminum alloy member in view of versatile use of composites of it with a PAS member. The metal member may be an expanded metal typically in plate form, a cast metal such as a die cast metal or a forged metal.

The metal member preferably has a chemically and/or physically treated surface to produce a good air-tight metal member-PAS member composite by direct joining with a PAS member. The chemical and/or physical surface treatment of the metal member may be carried out by any method. For example, as physical treatments, grinding or bombardment of the surface with fine solid particles and irradiation with high energy electromagnetic radiation may be mentioned. More specifically, sand blasting, liquid honing and laser processing may be mentioned. As the abrasive for sand blasting or liquid honing, sand, steel grids, steel shots, cut wire, alumina, silicon carbide, metal slag, glass beads, plastic beads or the like may be mentioned. Laser processing may be carried out as proposed in WO2007/072603 or JP-A-2015-142960.

As chemical treatments, anodizing and chemical treatment with an aqueous solution of an acid or an alkali may be mentioned. For example, in anodizing, electrolysis is carried out using the metal member as the anode electrode in the electrolytic solution to form an oxide layer on the surface of the metal member. Anodizing may be carried out by any anodizing method known in the field of plating, for example, 1) by direct current electrolysis under a constant DC voltage is applied, or 2) by bipolar electrolysis under a voltage generated by combining a DC component and an AC component. Specifically speaking, anodizing may be carried out as disclosed in WO2004/055248. In chemical treatment with an aqueous solution of an acid or an alkali, for example, the surface of a metal member is chemically treated by immersing the metal member in an aqueous solution of an acid or an alkali, such as a phosphorus compound such as phosphoric acid; chromium compounds such as chromic acid; hydrogen fluoride compound such as hydrogen fluoride; nitric acid compounds such as nitric acid; an aqueous alkali solution such as aqueous solutions of sodium hydroxide and ammonia; an aqueous solution of triazinethiol or an aqueous solution of a triazinethiol derivative may be mentioned. More specifically, the chemical treatment may be carried out as proposed in JP-A-2017-132243, JP-A-2019-188651, WO2008/133296, Japanese Patent No. 5622785, JP-A-H10-096088, JP-A-H10-056263, JP-A-H04-032585, JP-A-H04-032583, JP-A-H02-298284, WO2009/151099 or WO2011/104944.

The metal member-PAS member composite of the present invention may be produced by any method which directly joins the metal member and the PAS member by injection molding, but preferably by insert injection molding, in view of efficient production of the composite. For example, In insert injection molding, a melt of the PAS composition is injected into a mold holding the metal member in position to directly join a PAS member formed from the PAS composition and the metal member into a composite. The temperature of the melt of the PAS composition is from 280 to 340°C, and the molding machine to be used for insert injection molding is preferably an injection molding machine in view of high productivity. The mold temperature during insert molding is preferably 130°C or above, particularly preferably from 140 to 160°C in order to produce an air-tight metal member-PAS member composite efficiently. The mold holding pressure is preferably at least 1 MPa, particularly preferably at least 30 MPa and at most 100 MPa.

The metal member-PAS member composite of the present invention is not only reliably air-tight but also impact-resistant, lightweight and sited to mass production. It is useful for making parts of transport vehicles such as automobiles and airplanes and waterproof electric and electronic parts of mobile devices and the like.

### EXAMPLES

Now, the present invention will be described in further detail with reference to Examples. However, it should be understood that the present invention is by no means restricted thereto.

The PAS's (A), the modified ethylene copolymers (B), the glass fibers (C), the epoxy resin (E), the mold release agent (D) and the glass flakes (F) used In the Examples and Comparative Examples are mentioned below.

### <PAS's (A)>

Poly(p-phenylene sulfide) (hereinafter referred to as PPS (A-1)): melt viscosity 380 poises.

Poly(p-phenylene sulfide) (hereinafter referred to as PPS (A-2)): melt viscosity 790 poises.

Poly(p-phenylene sulfide) (hereinafter referred to as PPS (A-3)): melt viscosity 370 poises.

Poly(p-phenylene sulfide) (hereinafter referred to as PPS (A-4)): melt viscosity 80 poises.

Poly(p-phenylene sulfide) (hereinafter referred to as PPS (A-5)): melt viscosity 1280 poises.

Poly(p-phenylene sulfide) (hereinafter referred to as PPS (A-6)): melt viscosity 2500 poises.

Poly(p-phenylene sulfide) (hereinafter referred to as PPS (A-7)): melt viscosity 560 poises.

### <Modified Ethylene Copolymers (B)>

Copolymer (B-1) of ethylene, a glycidyl ester of an α,β-unsaturated carboxylic acid and a butyl ester of an α,β-unsaturated carboxylic acid (hereinafter referred to simply as ethylene copolymer (B-1)): LOTADER AX8750 (trade name) manufactured by SK global chemical Co. Ltd., units based on ethylene : units based on glycidyl methacrylate : units based on glycidyl acrylate = 70:5:25 (weight ratio).

Copolymer (B-2 of ethylene and a butyl ester of an α,β-unsaturated carboxylic acid and maleic anhydride (hereinafter referred to simply as ethylene copolymer (B-2)): LOTADER 3410 (trade name) manufactured by SK global chemical Co. Ltd., units based on ethylene : units based on butyl acrylate : units based on maleic anhydride = 80:17:3 (weight ratio).

Copolymer (B-3) of ethylene, a glycidyl ester of an α,β-unsaturated carboxylic acid and a methyl ester of an α,β-unsaturated carboxylic acid (hereinafter referred to simply as ethylene copolymer (B-3)): LOTADER AX9800 (trade name) manufactured by SK global chemical Co. Ltd., units based on ethylene : units based on glycidyl methacrylate : units based on ethyl acrylate = 68:8:24 (weight ratio).

Copolymer (B-4) of ethylene, an alkyl ester of an α,β-unsaturated carboxylic acid and maleic anhydride (hereinafter referred to simply as ethylene copolymer (B-4)): BONDINE AX8390 (trade name) manufactured by SK global chemical Co. Ltd., units based on ethylene : units based on the alkyl ester of an α,β-unsaturated carboxylic acid : units based on maleic anhydride = 69.7:29:1.3 (weight ratio).

Copolymer (B-5) of ethylene, a glycidyl ester of an α,β-unsaturated carboxylic acid and an alkyl ester of an α,β-unsaturated carboxylic acid (hereinafter referred to simply as ethylene copolymer (B-5)): LOTADER AX8700 (trade name) manufactured by SK global chemical Co. Ltd., units based on ethylene : units based on the glycidyl ester of an α,β-unsaturated carboxylic acid : units based on the alkyl ester of an α,β-unsaturated carboxylic acid = 67:8:25 (weight ratio).

### <Glass Fibers (C)>

Glass fiber (C-1): ECS03T-732H/PW (trade name), manufactured by Nippon Electric Glass Co., Ltd.

Glass fiber (C-2): chopped strands, manufactured by Nitto Boseki Co., Ltd., CSG-3PA 830 (trade name), having a cross section having an aspect ratio of 4.

Glass fiber (C-3): T-760H (trade name), manufactured by Nippon Electric Glass Co., Ltd., having a diameter of 10 µm and a length of 3 mm.

### <Epoxy Resin (E)>

Epoxy resin (E-1): 1004 (trade name), manufactured by Mitsubishi Chemical Corporation.

### (Mold Release Agent (D)>

Mold release agent (D-1): Light Amide WH-255 (trade name) manufactured by Kyoeisha Chemical Co., Ltd.

### <Glass Flakes (F)>

Glass flake (F-1): REFG-301 (trade name), manufactured by Nippon Sheet Glass Co., Ltd.; having an average diameter of 160 µm.

Glass flake (F-2): REFG-112 (trade name), manufactured by Nippon Sheet Glass Co., Ltd.; having an average diameter of 600 µm.

### <SYNTHETIC EXAMPLE 1 (Synthesis of PPS (A-1)>

Into a 50 L autoclave equipped with a stirrer, 6214 g of sodium sulfide flakes (Na₂S·2.9H₂O), 164 g of 30% aqueous sodium hydroxide (30% NaOH aq) and 17000 g of N-methyl-2-pyrrolidone were put and gradually heated to 200°C with stirring under nitrogen stream to remove 1355 g of water. After cooling to 190°C, 6800 g of p-dichlorobenzene and 5000 g of N-methyl-2-pyrrolidone were added, and the reaction system was sealed under a nitrogen stream. The reaction system was heated to 225°C over 2 hours, and polymerization was carried out at 225°C for 1 hour. Then, the system was heated to 250°C over 25 minutes, and polymerization was carried out at 250°C for 2 hours. After the polymerization, N-methyl-2-pyrrolidone was removed from the resulting polymer slurry by distillation under reduced pressure. The final temperature was 170°C, and the pressure was 4.7 kPa. The resulting PPS was washed twice in total, with warm water at 80°C by adding the water to the cake to a slurry concentration of 20% and then with the same amount of warm water under heating 175°C. The PPS was dried at 105°C for 1 day. The dry PPS was heated in a batch-type rotary kiln furnace at 240°C under a nitrogen atmosphere for 4 hours to obtain PPS (A-1) having a melt viscosity of 380 poises.

### <SYNTHETIC EXAMPLE 2 (Synthesis of PPS (A-2)>

Into a 50 L autoclave equipped with a stirrer, 6214 g of sodium sulfide flakes (Na₂S·2.9H₂O), 164 g of 30% aqueous sodium hydroxide (30% NaOH aq) and 17000 g of N-methyl-2-pyrrolidone were put and gradually heated to 200°C with stirring under nitrogen stream to remove 1355 g of water. After cooling to 190°C, 6890 g of p-dichlorobenzene and 5000 g of N-methyl-2-pyrrolidone were added, and the reaction system was sealed under a nitrogen stream. The reaction system was heated to 225°C over 2 hours, and polymerization was carried out at 225°C for 1 hour. Then, the system was heated to 250°C over 25 minutes, and polymerization was carried out at 250°C for 2 hours. After the polymerization, N-methyl-2-pyrrolidone was removed from the resulting polymer slurry by distillation under reduced pressure. The final temperature was 170°C, and the pressure was 4.7 kPa. The resulting PPS was washed twice in total, with warm water at 80°C by adding the water to the cake to a slurry concentration of 20% and then with the same amount of warm water under heating 175°C. The PPS was dried at 105°C for 1 day. The dry PPS was heated in a batch-type rotary kiln furnace at 240°C under a nitrogen atmosphere for 5 hours to obtain PPS (A-2) having a melt viscosity of 790 poises.

### <SYNTHETIC EXAMPLE 3 (Synthesis of PPS (A-3)>

Into a 50 L autoclave equipped with a stirrer, 6214 g of sodium sulfide flakes (Na₂S·2.9H₂O), 164 g of 30% aqueous sodium hydroxide (30% NaOH aq) and 17000 g of N-methyl-2-pyrrolidone were put and gradually heated to 200°C with stirring under nitrogen stream to remove 1346 g of water. After cooling to 190°C, 6900 g of p-dichlorobenzene, 12 g of 3,5-dichloroaniline and 5000 g of N-methyl-2-pyrrolidone were added, and the reaction system was sealed under a nitrogen stream. The reaction system was heated to 225°C over 2 hours, and polymerization was carried out at 225°C for 1 hour. Then, the system was heated to 250°C over 25 minutes, and polymerization was carried out at 250°C for 5 hours. After the polymerization, N-methyl-2-pyrrolidone was removed from the resulting polymer slurry by distillation under reduced pressure. The final temperature was 170°C, and the pressure was 4.7 kPa. The resulting PPS was washed twice in total, with warm water at 80°C by adding the water to the cake to a slurry concentration of 20% and then with the same amount of warm water under heating 175°C. The PPS was dried at 105°C for 1 day. The dry PPS was heated in a batch-type rotary kiln furnace at 240°C under a nitrogen atmosphere for 4 hours to obtain PPS (A-3) having a melt viscosity of 370 poises.

### <SYNTHETIC EXAMPLE 4 (Synthesis of PPS (A-4)>

Into a 50 L autoclave equipped with a stirrer, 6214 g of sodium sulfide flakes (Na₂S·2.9H₂O), 6214 g of sodium sulfide flakes (Na₂S·2.9H₂O), 164 g of 30% aqueous sodium hydroxide (30% NaOH aq) and 17000 g of N-methyl-2-pyrrolidone were put and gradually heated to 200°C with stirring under nitrogen stream to remove 1362 g of water. After cooling to 190°C, 6747 g of p-dichlorobenzene and 5000 g of N-methyl-2-pyrrolidone were added, and the reaction system was sealed under a nitrogen stream. The reaction system was heated to 225°C over 2 hours, and polymerization was carried out at 225°C for 1 hour. Then, the system was heated to 250°C over 25 minutes, and polymerization was carried out at 250°C for 2 hours. After the polymerization, N-methyl-2-pyrrolidone was removed from the resulting polymer slurry by distillation under reduced pressure. The final temperature was 170°C, and the pressure was 4.7 kPa. The resulting PPS was washed twice in total, with warm water at 80°C by adding the water to the cake to a slurry concentration of 20% and then with the same amount of warm water under heating 175°C. The PPS was dried at 105°C for 1 day. The dry PPS was heated in a batch-type rotary kiln furnace at 240°C under a nitrogen atmosphere for 1 hour to obtain PPS (A-4) having a melt viscosity of 80 poises.

### <SYNTHETIC EXAMPLE 5 (Synthesis of PPS (A-5)>

Into a 50 L autoclave equipped with a stirrer, 6214 g of sodium sulfide flakes (Na₂S·2.9H₂O), 164 g of 30% aqueous sodium hydroxide (30% NaOH aq) and 17000 g of N-methyl-2-pyrrolidone were put and gradually heated to 205°C with stirring under nitrogen stream to remove 1365 g of water. After cooling to 190°C, 6871 g of p-dichlorobenzene and 5000 g of N-methyl-2-pyrrolidone were added, and the reaction system was sealed under a nitrogen stream. The reaction system was heated to 225°C over 2 hours, and polymerization was carried out at 225°C for 2 hours. Then, the system was heated to 250°C over 30 minutes, and polymerization was carried out at 250°C for 2 hours. After the polymerization, N-methyl-2-pyrrolidone was removed from the resulting polymer slurry by distillation under reduced pressure. The final temperature was 170°C, and the pressure was 4.7 kPa. The resulting poly(p-phenylene sulfide) was washed twice in total, with warm water at 80°C by adding the water to the cake to a slurry concentration of 20% and then with the same amount of warm water under heating 175°C. The poly(p-phenylene sulfide) was dried at 105°C for 1 day. The dry poly(p-phenylene sulfide) was heated in a batch-type rotary kiln furnace at 240°C under a nitrogen atmosphere for 2 hours to obtain PPS (A-5) having a melt viscosity of 1280 poises.

### <SYNTHETIC EXAMPLE 6 (Synthesis of PPS (A-6)>

Into a 50 L autoclave equipped with a stirrer, 6865 g of sodium sulfide flakes (Na₂S·2.9H₂O), 164 g of 30% aqueous sodium hydroxide (30% NaOH aq) and 17000 g of N-methyl-2-pyrrolidone were put and gradually heated to 205°C with stirring under nitrogen stream to remove 1365 g of water. After cooling to 190°C, 7192 g of p-dichlorobenzene and 5000 g of N-methyl-2-pyrrolidone were added, and the reaction system was sealed under a nitrogen stream. The reaction system was heated to 225°C over 2 hours, and polymerization was carried out at 225°C for 2 hours. Then, the system was heated to 250°C over 25 minutes, and polymerization was carried out at 250°C for 3 hours. After the polymerization, N-methyl-2-pyrrolidone was removed from the resulting polymer slurry by distillation under reduced pressure. The final temperature was 170°C, and the pressure was 4.7 kPa. The resulting PPS was washed twice in total, with warm water at 80°C by adding the water to the cake to a slurry concentration of 20% and then with the same amount of warm water under heating 175°C. The PPS was dried at 105°C for 1 day. The dry PPS was heated in a batch-type rotary kiln furnace at 240°C under a nitrogen atmosphere for 5 hours to obtain PPS (A-6) having a melt viscosity of 2500 poises.

### <SYNTHETIC EXAMPLE 7 (Synthesis of PPS (A-7)>

The procedure in Synthetic Example 2 was followed except that the resulting PPS was washed with warm water at 80°C by adding the water to the cake to a slurry concentration of 20%, with 1% aqueous hydrochloric acid and then with the same amount of warm water under heating 175°C, to obtain PPS (A-7) having a melt viscosity of 560 poises.

PAS's and metal member-PAS member composites were evaluated as described below.

### -Measurement of Melt Viscosity of PAS-

The melt viscosity was measured with a Koka flowtester equipped with a 2 mm-long die having a diameter of 1 mm (CFT-500 (trade name) manufactured by Shimadzu Corporation) at 315°C under a load of 10 kg.

### -Measurement of MFR-

MFR was measured a 315°C under a load of 5 Kg in accordance with ISO 1133 using a die having an inner diameter of 2 mm.

### -Measurement of Crystallization Temperature-

The melt crystallization peak temperature (melt crystallization temperature: Tc2) was measured during cooling from 330°C to 150°C at a rate of 20°C/min after heating from 23°C to 330°C and heating at 330°C for 5 minutes by DSC.

### -Evaluation of Adhesion between Resin Member and Metal Member-

A metal plate having a chemically and/or physically treated surface was placed in an injection mold, then a PAS composition was fed to the hopper of an injection molding machine (SE75S (trade name), manufactured by Sumitomo Heavy Industries, Ltd.), and insert injection molding was carried out to obtain a tensile shear test specimen having a joint area of 50 mm². The bond strength of the joint in the tensile shear test specimen as measured in accordance with ISO 19095. A bond strength of 30 MPa or above was rated as good adhesion.

### -Air-Tightness Test and Evaluation of Air-Tightness-

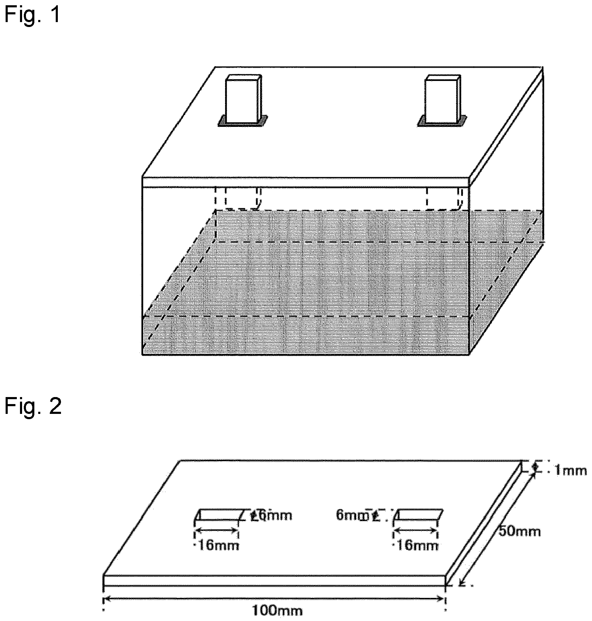

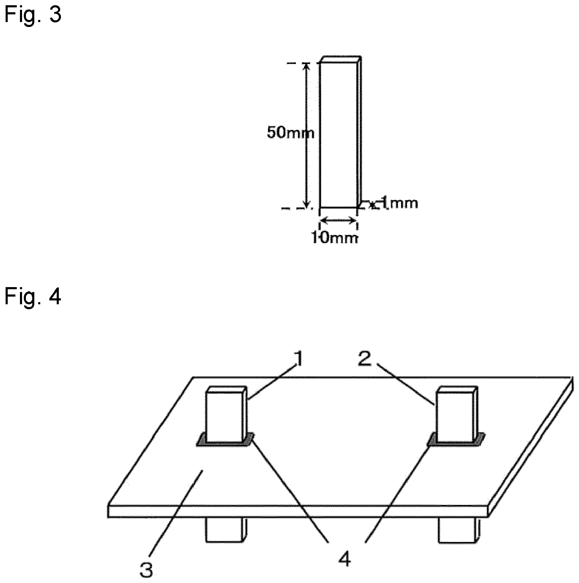

Distilled water was poured into an aluminum container with an open top, and the container was closed by welding a metal member-PAS member composite shown in Figure 4 as a lid to the container to make an air-tightness test container shown in Figure 1. The air-tightness test container was subjected to 2000 heat/cold cycles each comprising 30 minutes of heating at 150°C and 30 minutes of cooling at -40°C and returned to room temperature, and the joints between the metal plates and the metal top and the PAS members were covered with a test liquid. The inner pressure of the container was raised to 0.5 MPa and kept at 0.5 MPa for 1 minute, and the sealing properties were evaluated.
○: Good sealing properties with no bubble generations covered with the test liquid.
×: Poor sealing properties with bubbles from the joints covered with the test liquid.

### -Evaluation of Adhesion with Metal Member and Warpage-

A metal plate (127 mm × 12.7 mm × 0.5 mm thickness) having a chemically and/or physically treated surface was placed in a mold set at a mold temperature of 140°C, then a PAS composition was fed to the hopper of an injection molding machine (SE75S (trade name), manufactured by Sumitomo Heavy Industries, Ltd.) heated to 300°C, and insert injection molding was carried out to obtain a metal member-PAS member composite with dimension of 127 mm × 12.7 mm × 3.2 mm thickness (the ratio of length to thickness is 40, and the ratio of length to thickness is 4).

24 hours after the molding, the joint in the metal member-PAS member composite was visually evaluated.
○: No peeling was observed between the metal member and the PAS member.
×: Peeling was observed between the metal member and the PAS member.

24 hours after the molding, the warpage of the metal member-PAS member composite was evaluated by measuring the longitudinal flexure.

### EXAMPLE 1

Aluminum alloy (A5052) plates in the shape shown in Figure 3 (50 mm × 10 mm × 1 mm thickness), an aluminum alloy (A5052) top in the shape shown in Figure 2 and an aluminum alloy (A5052) plate for tensile shear test (45 mm × 18 mm × 1.5 mm thickness) were subjected to 5 minutes of immersion in a degreasing bath containing a 7.5% aqueous solution of an aluminum degreasing agent (at 60°C) followed by washing with deionized water, and 2 minutes of immersion in a bath containing an aqueous solution containing mixing sulfuric acid, ferric chloride, cupric chloride and deionized water in a weight ratio of 8.2:7.8:0.4:83.6 (at 30°C) followed by washing with deionized water and dried in a hot air dryer to obtain rough-surfaced aluminum alloy (A5052) and aluminum alloy (A5052) top.

100 parts by weight of PPS (A-1) obtained in Synthetic Example 1 was uniformly blended with 12 parts by weight of ethylene copolymer (B-1) and fed into the hopper of a double screw extruder with a cylinder heated to 300°C (TEX25αIII (trade name), manufactured by The Japan Steel Works, LTD.) and melt-kneaded with 30 parts by weight of glass fiber (C-1) fed into the hopper of the side feeder of the double screw extruder to obtain pellets of a PPS composition. The MFR and crystallization temperature of the PPS composition were measured.

The aluminum alloy (A5052) plates and the aluminum alloy (A5052) top, or the aluminum alloy (A5052) plate for tensile shear test, was placed in a mold set at a mold temperature of 140°C, and the PPS composition was molded by insert injection molding using an injection molding machine (SE75S (trade name), manufactured by Sumitomo Heavy Industries, Ltd.) at a cylinder temperature of 300°C and a mold holding pressure of 50 MPa to obtain an aluminum alloy (A5052) member-PPS member composite as a lid in the shape shown in Figure 4 or as a tensile shear test specimen. The adhesion between the resin member and the metal member in the aluminum alloy (A5052) member-PPS composition member composite was evaluated as good. The air-tightness of the aluminum alloy (A5052) member-PPS composition member composite was evaluated as good with no bubble generation.

### EXAMPLE 2

Die-casting aluminum alloy (ADC12) plates in the shape shown in Figure 3 (50 mm × 10 mm × 1 mm thickness), a die-casting aluminum alloy (ADC12) top in the shape shown in Figure 2 and an die-casting aluminum alloy (ADC12) plate for tensile shear test (45 mm × 18 mm × 1.5 mm thickness) were subjected to 5 minutes of immersion in a degreasing bath containing a 7.5% aqueous solution of an aluminum degreasing agent (at 60°C) followed by washing with deionized water, 1 minute of immersion in a bath containing 1.5% aqueous sodium hydroxide (at 40°C) followed by washing with deionized water, then 4 minutes of immersion in a bath containing an aqueous solution containing 5% hydrochloric acid and 1% aluminum chloride hydrate (at 40°C) followed by washing with deionized water, 1 minute of immersion in a bath containing an aqueous solution containing 2% ammonium hydrogen difluoride and 10% sulfuric acid (at 40°C) followed by washing with deionized water, 4 minutes of immersion in a bath containing 1.5% aqueous sodium hydroxide (at 40°C) followed by washing with deionized water, 2 minutes of immersion in a bath containing 3% aqueous nitric acid (at 40°C) followed by washing with deionized water, 1 minute of immersion in a bath containing 3.5% aqueous hydrazine hydrate (at 60°C) followed by washing with deionized water, and 1 minutes of immersion in a bath containing 0.5% aqueous hydrazine hydrate (at 33°C) followed by washing with deionized water, and dried in a hot air dryer to obtain rough-surfaced die-casting aluminum alloy (ADC12) plates and die-casting aluminum alloy (ADC12) top.

100 parts by weight of PPS (A-2) obtained in Synthetic Example 2 was uniformly blended with 10 parts by weight of ethylene copolymer (B-2 and fed into the hopper of a double screw extruder with a cylinder heated to 300°C (TEX25αIII (trade name), manufactured by The Japan Steel Works, LTD.) and melt-kneaded with 30 parts by weight of ) fed into the hopper of the side feeder of the double screw extruder to obtain pellets of a PPS composition. The MFR and crystallization temperature of the PPS composition were measured.

The die-casting aluminum alloy (ADC12) plates and the die-casting aluminum alloy (ADC12) top, or the die-casting aluminum alloy (ADC12) plate for tensile shear test, was placed in a mold set at a mold temperature of 145°C, and the PPS composition was molded by insert injection molding using an injection molding machine (SE75S (trade name), manufactured by Sumitomo Heavy Industries, Ltd.) at a cylinder temperature of 310°C and a mold holding pressure of 45 MPa to obtain a die-casting aluminum alloy (ADC12) member-PPS member composite as a lid in the shape shown in Figure 4 or as a tensile shear test specimen. The adhesion between the resin member and the metal member in the die-casting aluminum alloy (ADC12) member-PPS composition member composite was evaluated as good. The air-tightness of the die-casting aluminum alloy (ADC12) member-PPS composition member composite was evaluated as good with no bubble generation.

### EXAMPLE 3

Stainless steel (SUS316) plates in the shape shown in Figure 3 (50 mm × 10 mm × 1 mm thickness), a stainless steel (SUS316) top in the shape shown in Figure 2 and a stainless steel (SUS316) plate for tensile shear test (45 mm × 18 mm × 1.5 mm thickness) were subjected to 5 minutes of immersion in a degreasing bath containing a 7.5% aqueous solution of an aluminum degreasing agent (at 60°C) followed by washing with deionized water, then 1 minute of immersion in a bath containing 1.5% aqueous sodium hydroxide (at 40°C) followed by washing with deionized water, 3 minutes of immersion in a bath containing 10% aqueous sulfuric acid (at 65°C) followed by washing with deionized water, and 3 minutes of immersion in 3% aqueous nitric acid (at 40°C) followed by washing with deionized water, and dried in a hot air dryer to obtain rough-surfaced stainless steel (SUS316) and stainless steel (SUS316) top.

100 parts by weight of PPS (A-3) obtained in Synthetic Example 3 was uniformly blended with 12 parts by weight of ethylene copolymer (B-3) and fed into the hopper of a double screw extruder with a cylinder heated to 300°C (TEX25αIII (trade name), manufactured by The Japan Steel Works, LTD.) and melt-kneaded with 30 parts by weight of glass fiber (C-1) fed into the hopper of the side feeder of the double screw extruder to obtain pellets of a PPS composition. The MFR and crystallization temperature of the PPS composition were measured.

The stainless steel (SUS316) plates and the stainless steel (SUS316) top, or the stainless steel (SUS316) plate for tensile shear test, was placed in a mold set at a mold temperature of 140°C, and the PPS composition was molded by insert injection molding using an injection molding machine (SE75S (trade name), manufactured by Sumitomo Heavy Industries, Ltd.) at a cylinder temperature of 300°C and a mold holding pressure of 50 MPa to obtain a stainless steel (SUS316) member-PPS member composite as a lid in the shape shown in Figure 4 or as a tensile shear test specimen. The adhesion between the resin member and the metal member in the stainless steel (SUS316) member-PPS composition member composite was evaluated as good. The air-tightness of the stainless steel (SUS316) member-PPS composition member composite was evaluated as good with no bubble generation.

### EXAMPLE 4

Copper (C1100) plates in the shape shown in Figure 3 (50 mm × 10 mm × 1 mm thickness), a copper (C1100) top in the shape shown in Figure 2 and a copper (C1100) plate for tensile shear test (45 mm × 18 mm × 1.5 mm thickness) were subjected to 5 minutes of immersion in a degreasing bath containing a 7.5% aqueous solution of an aluminum degreasing agent (at 60°C) followed by washing with deionized water, 1 minute of immersion in a bath containing 1.5% aqueous sodium hydroxide (at 40°C) followed by washing with deionized water, then 1 minute of immersion in a bath containing 10% aqueous nitric acid (at 40°C) for followed by washing with deionized water, 10 minutes of immersion in a bath containing 3% aqueous nitric acid (at 40°C) followed by washing with deionized water, 35 minutes of immersion in a bath containing an aqueous solution containing 2% potassium permanganate and 3% potassium hydroxide (at 70°C) followed by washing with deionized water, and 10 minutes of immersion in a bath containing an aqueous solution containing 5% sodium chlorite and 10% sodium hydroxide (at 55°C) followed by washing with deionized water, and dried in a hot air dryer to obtain rough-surfaced copper (C1100) plates and copper (C1100) top.

100 parts by weight of PPS (A-1) obtained in Synthetic Example 1 was uniformly blended with 10 parts by weight of ethylene copolymer (B-1) and fed into the hopper of a double screw extruder with a cylinder heated to 300°C (TEX25αIII (trade name), manufactured by The Japan Steel Works, LTD.) and melt-kneaded with 45 parts by weight of glass fiber (C-2) fed into the hopper of the side feeder of the double screw extruder to obtain pellets of a PPS composition. The MFR and crystallization temperature of the PPS composition were measured.

The copper (C1100) plates and the copper (C1100) top, or the copper (C1100) plate for tensile shear test, was placed in a mold set at a mold temperature of 145°C, and the PPS composition was molded by insert injection molding using an injection molding machine (SE75S (trade name), manufactured by Sumitomo Heavy Industries, Ltd.) at a cylinder temperature of 300°C and a mold holding pressure of 55 MPa to obtain a copper (C1100) member-PPS member composite as a lid in the shape shown in Figure 4 or as a tensile shear test specimen. The adhesion between the resin member and the metal member in the copper (C1100) member-PPS composition member composite was evaluated as good. The air-tightness of the copper (C1100) member-PPS composition member composite was evaluated as good with no bubble generation.

### EXAMPLES 5 TO 10

Pellets of PAS compositions were obtained in the same manner as in Example 1 except that the amounts of the PAS (A), the ethylene copolymer, the glass fiber (C), the mold release agent (D) and the epoxy resin (E) were changed as shown in Table 1. The MFRs and crystallization temperatures of the PPS compositions were measured.

Rough-surfaced aluminum alloy (A5052) plates and an aluminum alloy (A5052) top obtained in the same manner as in Example 1, or a rough-surfaced aluminum alloy (A5052) plate for tensile shear test obtained in the same manner as in Example 1, was placed in a mold, and insert injection molding was conducted in the same manner as in Example 1 except that the injection molding conditions were changed as shown in Table 1 to obtain aluminum alloy (A5052) member-PPS member composites as lids or as tensile shear test specimens. The adhesion between the resin member and the metal member in the aluminum alloy (A5052) member-PPS composition member composites was evaluated as good. The air-tightness of the aluminum alloy (A5052) member-PPS composition member composites was evaluated as good with no bubble generation.

**[Table 1]**

| | | | | Example | | | | | | | | | |
|---|---|---|---|---|---|---|---|---|---|---|---|---|---|
| | | | unit | 1 | 2 | 3 | 4 | 5 | 6 | 7 | 8 | 9 | 10 |
| Amount | Polyarylene sulfide (A) | | parts by weight | | | | | | | | | | |
| | | PPS (A-1) | | 100 | | | 100 | | | | 100 | 100 | 100 |
| | | PPS (A-2) | | | 100 | | | | 100 | | | | |
| | | PPS (A-3) | | | | 100 | | 100 | | 100 | | | |
| | Modified ethylene copolymer (B) | | | | | | | | | | | | |
| | | Ethylene copolymer (B-1) | | 12 | | | 15 | | | | | 10 | |
| | | Ethylene copolymer (B-2) | | | 10 | | | 15 | | 15 | | | 10 |
| | | Ethylene copolymer (B-3) | | | | 12 | | | 15 | | 23 | | |
| | Glass fiber (C) | | | | | | | | | | | | |
| | | Glass fiber (C-1) | | 30 | | 30 | | | 15 | | 40 | 15 | 60 |
| | | Glass fiber (C-2) | | | 30 | | 45 | 75 | | 100 | | | |
| | Mold release agent (D) | | | | | | | | | | | | |
| | | Mold release agent (D-1) | | | | | | | 1 | | 1 | | |
| | Epoxy resin (E) | | | | | | | | | | | | |
| | | Epoxy resin (E-1) | | | | | | 3 | | 2 | | | 2 |
| Molding conditions | Mold temperature | | °C | 140 | 145 | 140 | 145 | 145 | 140 | 145 | 135 | 135 | 145 |
| | Mold holding pressure | | Mpa | 50 | 45 | 50 | 55 | 55 | 50 | 60 | 40 | 40 | 55 |
| Evaluation | MFR | | g/10 min | 110 | 68 | 78 | 97 | 68 | 75 | 36 | 76 | 125 | 109 |
| | Melt crystallization temperature (Tc2) | | °C | 218 | 221 | 210 | 216 | 222 | 213 | 220 | 219 | 224 | 225 |
| | Bond strength | | MPa | 44 | 43 | 42 | 38 | 35 | 41 | 34 | 38 | 36 | 35 |
| | Air-tightness | | | ○ | ○ | ○ | ○ | ○ | ○ | ○ | ○ | ○ | ○ |

### COMPARATIVE EXAMPLES 1 TO 4

Pellets of PAS compositions were obtained in the same manner as in Example 1 except that the amounts of the PAS (A), the ethylene copolymer (B), the glass fiber (C) and the epoxy resin (E) were changed as shown in Table 2. The MFRs and crystallization temperatures of the PPS compositions were measured.

Rough-surfaced aluminum alloy (A5052) plates and an aluminum alloy (A5052) top obtained in the same manner as in Example 1, or a rough-surfaced aluminum alloy (A5052) plate for tensile shear test obtained in the same manner as in Example 1, was placed in a mold, and insert injection molding was conducted in the same manner as in Example 1 except that the injection molding conditions were changed as shown in Table 1 to obtain aluminum alloy (A5052) member-PAS member composites as lids or as tensile shear test specimens.

The adhesion between the resin member and the metal member in all the aluminum alloy (A5052) member-PAS member composites and the air-tightness of all the aluminum alloy (A5052) member-PAS member composites were evaluated as poor.

### COMPARATIVE EXAMPLE 5

Pellets of a PAS composition were obtained in the same manner as in Example 1 except that the amounts of the PAS (A), the ethylene copolymer (B) and the glass fiber (C), were changed as shown in Table 2. The MFRs and crystallization temperatures of the PPS composition were measured.

Rough-surfaced aluminum alloy (A5052) plates and an aluminum alloy (A5052) top obtained in the same manner as in Example 1, or a rough-surfaced aluminum alloy (A5052) plate for tensile shear test obtained in the same manner as in Example 1, was placed in a mold, and insert injection molding was conducted in the same manner as in Example 1 except that the injection molding conditions were changed as shown in Table 2, but failed to produce an aluminum alloy (A5052) member-PAS composition member composite due to severe drooling.

### COMPARATIVE EXAMPLES 6 AND 7

Pellets of PAS compositions were obtained in the same manner as in Example 1 except that the amounts of the PAS (A), the ethylene copolymer (B) and the glass fiber (C), were changed as shown in Table 2. The MFRs and crystallization temperatures of the PPS compositions were measured.

Rough-surfaced die-casting aluminum alloy (ADC12) plates and a die-casting aluminum alloy (ADC12) top obtained in the same manner as in Example 2, or a rough-surfaced die-casting aluminum alloy (ADC12) plate for tensile shear test obtained in the same manner as in Example 1, was placed in a mold, and insert injection molding was conducted in the same manner as in Example 2 except that the injection molding conditions were changed as shown in Table 2 to obtain die-casting aluminum alloy (ADC12) member-PAS member composites as lids or as tensile shear test specimens.

The adhesion between the resin member and the metal member in all the die-casting aluminum alloy (ADC12) member-PAS member composites and the air-tightness of all the die-casting aluminum alloy (ADC12) member-PAS member composites were evaluated as poor.

**[Table 2]**

| | | | | Comparative Example | | | | | | |
|---|---|---|---|---|---|---|---|---|---|---|
| | | | unit | 1 | 2 | 3 | 4 | 5 | 6 | 7 |
| Amount | Polyarylene sulfide (A) | | parts by weight | | | | | | | |
| | | PPS (A-1) | | 100 | 100 | 100 | 100 | | | |
| | | PPS (A-4) | | | | | | 100 | | |
| | | PPS (A-6) | | | | | | | 100 | |
| | | PPS (A-7) | | | | | | | | 100 |
| | Modified ethylene copolymer (B) | | | | | | | | | |
| | | Ethylene copolymer (B-1) | | 2 | 12 | | 12 | 12 | 12 | 12 |
| | | Ethylene copolymer (B-2) | | | | 30 | | | | |
| | Glass fiber (C) | | | | | | | | | |
| | | Glass fiber (C-1) | | 30 | 5 | 30 | 130 | 30 | 30 | 30 |
| | | Glass fiber (C-2) | | | | | | | | |
| | Epoxy resin (E) | | | | | | | | | |
| | | Epoxy resin (E-1) | | | | 2 | | | | |
| Molding conditions | Mold temperature | | °C | 140 | 140 | 135 | 150 | 135 | 145 | 140 |
| | Mold holding pressure | | Mpa | 50 | 50 | 45 | 55 | 50 | 50 | 50 |
| Evaluation | MFR | | g/10 min | 132 | 111 | 12 | 38 | 168 | 18 | 115 |
| | Melt crystallization temperature (Tc2) | | °C | 235 | 215 | 213 | 232 | 228 | 216 | 234 |
| | Bond strength | | MPa | 5 | 26 | 15 | 18 | - | 22 | 27 |
| | Air-tightness | | | × | × | × | × | - | × | × |

### Example 11

Aluminum alloy (A5052) plates in the shape shown in Figure 3 (50 mm × 10 mm × 1 mm thickness), an aluminum alloy (A5052) top in the shape shown in Figure 2 and an aluminum alloy (A5052) plate (127 mm × 12.7 mm × 0.5 mm thickness) were subjected to 5 minutes of immersion in a degreasing bath containing a 7.5% aqueous solution of an aluminum degreasing agent (at 60°C) followed by washing with deionized water, 1 minute of immersion in a bath containing 1.5% aqueous sodium hydroxide (at 40°C) followed by washing with deionized water, 1 minute of immersion in a bath containing 3% aqueous nitric acid (at 40°C) followed by washing with deionized water, 1 minute of immersion in a bath containing 3.5% aqueous hydrazine hydrate (at 60°C) followed by washing with deionized water, and 3 minutes of immersion in a bath containing 0.5% aqueous hydrazine hydrate (at 33°C) followed by washing with deionized water, and dried in a hot air dryer to obtain rough-surfaced aluminum alloy (A5052) and aluminum alloy (A5052) top.

100 parts by weight of PPS (A-1) obtained in Synthetic Example 1 was uniformly blended with 10 parts by weight of ethylene copolymer (B-1) and 50 parts by weight of glass flake (F-1) and fed into the hopper of a double screw extruder with a cylinder heated to 300°C (TEX25αIII (trade name), manufactured by The Japan Steel Works, LTD.) and melt-kneaded with 50 parts by weight of glass fiber (C-3) fed into the hopper of the side feeder of the double screw extruder to obtain pellets of a PPS composition. The MFR and crystallization temperature of the PPS composition were measured.

The aluminum alloy (A5052) plates and the aluminum alloy (A5052) top were placed in a mold set at a mold temperature of 145°C, and the PPS composition was molded by insert injection molding using an injection molding machine (SE75S (trade name), manufactured by Sumitomo Heavy Industries, Ltd.) at a cylinder temperature of 310°C and a mold holding pressure of 50 MPa to obtain an aluminum alloy (A5052) member-PPS member composite as a lid in the shape shown in Figure 4. The adhesion with metal in the aluminum alloy (A5052) member-PAS member composite was evaluated as good, and no warpage was observed. The air-tightness of the aluminum alloy (A5052) member-PAS member composite was evaluated as good with no bubble generation.

### EXAMPLE 12

Die-casting aluminum alloy (ADC12) plates in the shape shown in Figure 3 (50 mm × 10 mm × 1 mm thickness) and a die-casting aluminum alloy (ADC12) top in the shape shown in Figure 2 were subjected to 5 minutes of immersion in a degreasing bath containing a 7.5% aqueous solution of an aluminum degreasing agent (at 60°C) followed by washing with deionized water, 1 minute of immersion in a bath containing 1.5% aqueous sodium hydroxide (at 40°C) followed by washing with deionized water, then 4 minutes of immersion in a bath containing an aqueous solution containing 5% hydrochloric acid and 1% aluminum chloride hydrate (at 40°C) followed by washing with deionized water, 1 minute of immersion in a bath containing an aqueous solution containing 2% ammonium hydrogen difluoride and 10% sulfuric acid (at 40°C) followed by washing with deionized water, 4 minutes of immersion in a bath containing 1.5% aqueous sodium hydroxide (at 40°C) followed by washing with deionized water, 2 minutes of immersion in a bath containing 3% aqueous nitric acid (at 40°C) followed by washing with deionized water, 1 minute of immersion in a bath containing 3.5% aqueous hydrazine hydrate (at 60°C) followed by washing with deionized water and 1 minute of immersion in a bath containing 0.5% aqueous hydrazine hydrate (at 33°C) followed by washing with deionized water, and dried in a hot air dryer to obtain rough-surfaced die-casting aluminum alloy (ADC12) plates and die-casting aluminum alloy (ADC12) top.

100 parts by weight of PPS (A-2) obtained in Synthetic Example 2 was uniformly blended with 10 parts by weight of ethylene copolymer (B-4), 4 parts by weight of epoxy resin (E-1) and 45 parts by weight of glass flake (F-1) and fed into the hopper of a double screw extruder with a cylinder heated to 310°C (TEX25αIII (trade name), manufactured by The Japan Steel Works, LTD.) and melt-kneaded with 55 parts by weight of glass fiber (C-2) fed into the hopper of the side feeder of the double screw extruder to obtain pellets of a PPS composition. The MFR and crystallization temperature of the PPS composition were measured.

The die-casting aluminum alloy (ADC12) plates and the die-casting aluminum alloy (ADC12) top were placed in a mold set at a mold temperature of 150°C, and the PPS composition was molded by insert injection molding using an injection molding machine (SE75S (trade name), manufactured by Sumitomo Heavy Industries, Ltd.) at a cylinder temperature of 310°C and a mold holding pressure of 60 MPa to obtain a die-casting aluminum alloy (ADC12) member-PPS member composite as a lid in the shape shown in Figure 4. The adhesion with metal in the die-casting aluminum alloy (ADC12) member-PAS member composite was evaluated as good, and no warpage was observed. The air-tightness of the die-casting aluminum alloy (ADC12) member-PAS member composite was evaluated as good with no bubble generation.

### EXAMPLE 13

Stainless steel (SUS304) plates in the shape shown in Figure 3 (50 mm × 10 mm × 1 mm thickness), a stainless steel (SUS304) top in the shape shown in Figure 2 were subjected to 5 minutes of immersion in a degreasing bath containing a 7.5% aqueous solution of an aluminum degreasing agent (at 60°C) followed by washing with deionized water and 13 minutes of immersion in a bath containing an aqueous solution obtained by mixing 35% aqueous hydrochloric acid, 38% aqueous ferric chloride, aqueous manganese chloride tetrahydrate, 40% aqueous 2-alkyl-N-carboxymethyl-N-hydroxyethylimidazolinium betaine and deionized water in a weight ratio of 11:48:1:0.05:39.95 (at 53°C) followed by washing with deionized water, and dried in a hot air dryer to obtain rough-surfaced stainless steel (SUS304) and stainless steel (SUS304) top.

100 parts by weight of PPS (A-3) obtained in Synthetic Example 3 was uniformly blended with 10 parts by weight of ethylene copolymer (B-4), 3 parts by weight of epoxy resin (E-1) and 45 parts by weight of glass flake (F-1) and fed into the hopper of a double screw extruder with a cylinder heated to 300°C (TEX25αIII (trade name), manufactured by The Japan Steel Works, LTD.) and melt-kneaded with 55 parts by weight of glass fiber (C-3) fed into the hopper of the side feeder of the double screw extruder to obtain pellets of a PPS composition. The MFR and crystallization temperature of the PPS composition were measured.

The stainless steel (SUS304) plates and the stainless steel (SUS304) top were placed in a mold set at a mold temperature of 145°C, and the PPS composition was molded by insert injection molding using an injection molding machine (SE75S (trade name), manufactured by Sumitomo Heavy Industries, Ltd.) at a cylinder temperature of 300°C and a mold holding pressure of 50 MPa to obtain a stainless steel (SUS304) member-PPS member composite as a lid in the shape shown in Figure 4. The adhesion with metal in the stainless steel (SUS304) member-PAS member composite was evaluated as good, and no warpage was observed. The air-tightness of the stainless steel (SUS304) member-PAS member composite was evaluated as good with no bubble generation.

### EXAMPLE 14

Copper (C1100) plates in the shape shown in Figure 3 (50 mm × 10 mm × 1 mm thickness), a copper (C1100) top in the shape shown in Figure 2 were irradiated with a laser beam with an output power of 24W, a wavelength of 1090 nm, a pulse frequency of 60 kHz, a cutting speed of 2000 mm/sec and a linewidth of 0.05 mm from a laser oscillator, Fiber Laser (MD-F3200 (trade name), manufactured by KEYENCE CORPORATION) to obtain rough-surfaced copper (C1100) plates and copper (C1100) top.

100 parts by weight of PPS (A-1) obtained in Synthetic Example 1 was uniformly blended with 20 parts by weight of ethylene copolymer (B-4), 6 parts by weight of epoxy resin (E-1) and 40 parts by weight of glass flake (F-2) and fed into the hopper of a double screw extruder with a cylinder heated to 300°C (TEX25αIII (trade name), manufactured by The Japan Steel Works, LTD.) and melt-kneaded with 60 parts by weight of glass fiber (C-3) fed into the hopper of the side feeder of the double screw extruder to obtain pellets of a PPS composition. The MFR and crystallization temperature of the PPS composition were measured.

The copper (C1100) plates and the copper (C1100) top were placed in a mold set at a mold temperature of 145°C, and the PPS composition was molded by insert injection molding using an injection molding machine (SE75S (trade name), manufactured by Sumitomo Heavy Industries, Ltd.) at a cylinder temperature of 300°C and a mold holding pressure of 55 MPa to obtain a copper (C1100) member-PPS member composite as a lid in the shape shown in Figure 4. The adhesion with metal in the copper (C1100) member-PAS member composite was evaluated as good, and no warpage was observed. The air-tightness of the copper alloy (C1100) member-PAS member composite was evaluated as good with no bubble generation.

### Example 15

Copper (C1100) plates in the shape shown in Figure 3 (50 mm × 10 mm × 1 mm thickness), a copper (C1100) top in the shape shown in Figure 2 were subjected to 5 minutes of immersion in a degreasing bath containing a 7.5% aqueous solution of an aluminum degreasing agent (at 60°C) followed by washing with deionized water, 1 minute of immersion in a bath containing 1.5% aqueous sodium hydroxide (at 40°C) followed by washing with deionized water, then 1 minute of immersion in a bath containing 10% aqueous nitric acid (at 40°C) for followed by washing with deionized water, 10 minutes of immersion in a bath containing 3% aqueous nitric acid (at 40°C) followed by washing with deionized water, 35 minutes of immersion in a bath containing an aqueous solution containing 2% potassium permanganate and 3% potassium hydroxide (at 70°C) followed by washing with deionized water, and 10 minutes of immersion in a bath containing an aqueous solution containing 5% sodium chlorite and 10% sodium hydroxide (at 55°C) followed by washing with deionized water, and dried in a hot air dryer to obtain rough-surfaced copper (C1100) plates and copper (C1100) top.

100 parts by weight of PPS (A-3) obtained in Synthetic Example 3 was uniformly blended with 15 parts by weight of ethylene copolymer (B-5), 1 part by weight of epoxy resin (E-1) and 60 parts by weight of glass flake (F-1) and fed into the hopper of a double screw extruder with a cylinder heated to 300°C (TEX25αIII (trade name), manufactured by The Japan Steel Works, LTD.) and melt-kneaded with 40 parts by weight of glass fiber (C-2) fed into the hopper of the side feeder of the double screw extruder to obtain pellets of a PPS composition. The MFR and crystallization temperature of the PPS composition were measured.

The copper (C1100) plates and the copper (C1100) top were placed in a mold set at a mold temperature of 150°C, and the PPS composition was molded by insert injection molding using an injection molding machine (SE75S (trade name), manufactured by Sumitomo Heavy Industries, Ltd.) at a cylinder temperature of 300°C and a mold holding pressure of 60 MPa to obtain a copper (C1100) member-PPS member composite as a lid in the shape shown in Figure 4. The adhesion with metal in the copper (C1100) member-PAS member composite was evaluated as good, and no warpage was observed. The air-tightness of the copper (C1100) member-PAS member composite was evaluated as good with no bubble generation.

### EXAMPLES 16 TO 20

Pellets of PAS compositions were obtained in the same manner as in Example 1 except that the amounts of the PAS (A), the ethylene copolymer (B), the glass fiber (C), the mold release agent (D) and the epoxy resin (E) were changed as shown in Table 1. The MFRs and crystallization temperatures of the PPS compositions were measured.

Rough-surfaced aluminum alloy (A5052) plates and an aluminum alloy (A5052) top obtained in the same manner as in Example 11 were placed in a mold, and insert injection molding was conducted in the same manner as in Example 1 except that the injection molding conditions were changed as shown in Table 1 to obtain aluminum alloy (A5052) member-PPS member composites as lids. The adhesion with metal in the aluminum alloy (A5052) member-PAS member composites was evaluated as good, and no warpage was observed. The air-tightness of the aluminum alloy (A5052) member-PAS member composites was evaluated as good with no bubble generation.

**[Table 3]**

| | | | | Example | | | | | | | | | |
|---|---|---|---|---|---|---|---|---|---|---|---|---|---|
| | | | unit | 11 | 12 | 13 | 14 | 1 15 | 16 | 1 17 | 18 | 19 | 20 |
| Amount | Polyarylene sulfide (A) | | parts by weight | | | | | | | | | | |
| | | PPS (A-1) | | 100 | | | 100 | | | 100 | 100 | 100 | |
| | | PPS (A-2) | | | 100 | | | | 100 | | | | |
| | | PPS (A-3) | | | | 100 | | 100 | | | | | 100 |
| | Modified ethylene copolymer (B) | | | | | | | | | | | | |
| | | Ethylene copolymer (B⁻4) | | | 10 | 10 | 20 | | | 10 | 10 | 15 | 20 |
| | | Ethylene copolymer (B-5) | | 10 | | | | 15 | 20 | | | | |
| | Glass fiber (C) | | | | | | | | | | | | |
| | | Glass fiber (C-3) | | 50 | | 55 | 60 | | 55 | | 30 | | |
| | | Glass fiber (C-2) | | | 55 | | | 40 | | 60 | | 75 | 55 |
| | Epoxy resin (E) | | | | | | | | | | | | |
| | | Epoxy resin (E-1) | | 1 | 4 | 3 | 6 | 1 | 1 | 3 | 3 | 4 | 6 |
| | Glass flake (F) | | | | | | | | | | | | |
| | | Glass flake (F-1) | | 50 | 45 | 45 | | 60 | 40 | 30 | 20 | | 20 |
| | | Glass flake (F-2) | | | | | 40 | | | | 35 | 40 | 20 |
| | Mold release agent (D) | | | | | | | | | | | | |
| | | Mold release agent (D-1) | | | | | | 1 | 1 | | | | 1 |
| Molding conditions | Mold temperature | | °C | 145 | 150 | 145 | 145 | 150 | 150 | 140 | 140 | 145 | 150 |
| | Mold holding pressure | | Mpa | 50 | 60 | 50 | 55 | 60 | 60 | 40 | 45 | 45 | 50 |
| Evaluation | MFR | | g/10 min | 70 | 63 | 85 | 66 | 68 | 35 | 125 | 103 | 94 | 82 |
| | Melt crystallization temperature (Tc2) | | °C | 221 | 221 | 218 | 220 | 215 | 216 | 221 | 220 | 222 | 218 |
| | Warpage | | mm | 0 | 0 | 0 | 0 | 0 | 0 | 0 | 0 | 0 | 0 |
| | Adhesion with metal | | | 6 | ○ | ○ | ○ | ○ | ○ | ○ | ○ | ○ | ○ |
| | Air-tightness | | | ○ | ○ | ○ | ○ | ○ | ○ | ○ | ○ | ○ | ○ |

### COMPARATIVE EXAMPLES 8 TO 11

Pellets of PAS compositions were obtained in the same manner as in Example 1 except that the amounts of the PAS (A), the ethylene copolymer (B), the epoxy resin (E), the glass fiber (C) and the glass flake (F) were changed as shown in Table 4. The MFRs and crystallization temperatures of the PPS compositions were measured.

Rough-surfaced aluminum alloy (A5052) plates and an aluminum alloy (A5052) top obtained in the same manner as in Example 11 were placed in a mold, and insert injection molding was conducted in the same manner as in Example 11 except that the injection molding conditions were changed as shown in Table 4 to obtain aluminum alloy (A5052) member-PAS member composites as lids.

The adhesion with metal in all the aluminum alloy (A5052) member-PAS member composites and the air-tightness of all the aluminum alloy (A5052) member-PAS member composites were evaluated as poor.

### COMPARATIVE EXAMPLE 12

Pellets of a PAS composition were obtained in the same manner as in Example 11 except that the amounts of the PAS (A), the ethylene copolymer (B), the epoxy resin (E), the glass fiber (C) and the glass flake (F) were changed as shown in Table 4. The MFRs and crystallization temperatures of the PPS composition were measured.

Rough-surfaced aluminum alloy (A5052) plates and an aluminum alloy (A5052) top obtained in the same manner as in Example 11 were placed in a mold, and insert injection molding was conducted in the same manner as in Example 11 except that the injection molding conditions were changed as shown in Table 4, but failed to produce an aluminum alloy (A5052) member-PAS member composite due to severe drooling.

### COMPARATIVE EXAMPLES 13 TO 17

Pellets of PAS compositions were obtained in the same manner as in Example 11 except that the amounts of the PAS (A), the ethylene copolymer (B), the epoxy resin (E), the glass fiber (C) and the glass flake (F), were changed as shown in Table 4. The MFRs and crystallization temperatures of the PPS compositions were measured.

Rough-surfaced copper (C1100) plates and a copper (C1100) top obtained in the same manner as in Example 15 were placed in a mold, and insert injection molding was conducted in the same manner as in Example 15 except that the injection molding conditions were changed as shown in Table 4 to obtain copper (C1100) member-PAS member composites as lids.

The adhesion with metal in the copper (C1100) member-PAS member composites and the air-tightness of all the copper (C1100) member-PAS member composites were evaluated as poor. Comparative Example 17 filed to produce a copper (C1100) member-PAS member composite due to severe drooling.

**[Table 4]**

| | | | | Comparative Example | | | | | | | | | |
|---|---|---|---|---|---|---|---|---|---|---|---|---|---|
| | | | unit | 8 | 9 | 10 | 11 | 1 12 | 13 | 1 14 | 15 | 16 | 17 |
| Amount | Polyarylene sulfide (A) | | parts by weight | | | | | | | | | | |
| | | PPS (A-1) | | 100 | 100 | 100 | 100 | | | | | 100 | 100 |
| | | PPS (A-4) | | | | | | 100 | | | | | |
| | | PPS (A-5) | | | | | | | 100 | | | | |
| | | PPS (A-6) | | | | | | | | 100 | | | |
| | | PPS (A-7) | | | | | | | | | 100 | | |
| | Modified ethylene copolymer (B) | | | | | | | | | | | | |
| | | Ethylene copolymer (B-4) | | 2 | 10 | | | 10 | 10 | | 10 | 30 | 10 |
| | | Ethylene copolymer (B-5) | | | | 10 | 10 | | | 10 | | | |
| | Glass fiber (C) | | | | | | | | | | | | |
| | | Glass fiber (C-3) | | 50 | 50 | 110 | 5 | | 55 | 55 | 50 | 50 | 50 |
| | | Glass fiber (C-2) | | | | | | 50 | | | | | |
| | Epoxy resin (E) | | | | | | | | | | | | |
| | | Epoxy resin (E-1) | | 3 | | 1 | 1 | 3 | 3 | 1 | 3 | 5 | 20 |
| | Glass flake (F) | | | | | | | | | | | | |
| | | Glass flake (F-1) | | 50 | 50 | 50 | 90 | 50 | 45 | 45 | 50 | 50 | 50 |
| Molding conditions | Mold temperature | | °C | 140 | 145 | 150 | 150 | 140 | 145 | 150 | 140 | 135 | 140 |
| | Mold holding pressure | | Mpa | 50 | 50 | 60 | 60 | 40 | 50 | 60 | 50 | 45 | 40 |
| Evaluation | MFR | | g/10 min | 93 | 98 | 18 | 15 | 162 | 63 | 15 | 105 | 15 | 160 |
| | Melt crystallization temperature (Tc2) | | °C | 231 | 231 | 229 | 221 | 222 | 231 | 233 | 235 | 198 | 219 |
| | Warpage | | mm | 0 | 0 | 0 | 0 | - | 0 | 0 | 0 | 0.2 | - |
| | Adhesion with metal | | MPa | × | × | × | × | - | × | × | × | × | - |
| | Air-tightness | | | × | × | × | × | - | x | × | × | × | - |

The entire disclosures of Japanese Patent Application No. 2021-131056 and Japanese Patent Application No. 2021-131059 filed on August 11, 2021, including specifications, claims, drawings and summaries are incorporated herein by reference in their entireties.

### INDUSTRIAL APPLICABILITY

The composition of the present invention is a metal member-PAS member composite having an air-tight joint, useful for making parts of transport vehicles such as automobiles and airplanes and waterproof electric and electronic parts of mobile devices and the like.

### REFERENCE SYMBOLS

- 1;: Metal plate.
- 2;: Metal plate.
- 3;: Metal top.
- 4;: PPS resin member.

## Claims

1. A metal member-polyarylene sulfide resin member composite which comprises a metal member and a polyarylene sulfide resin member and is obtained by injection molded direct joining, wherein the polyarylene sulfide resin member is formed by injection molding of a polyarylene sulfide composition which satisfies all of the following (1) to (3):
(1); in differential scanning calorimetry (DSC) during cooling from 330°C to 150°C at a rate of 20°C/min after heating from 23°C to 330°C and heating at 330°C for 5 minutes, the polyarylene sulfide composition has a melt crystallization peak temperature of at least 200°C and at most 230°C,
(2); the polyarylene sulfide resin composition has a melt flow rate (MFR) of at least 20 g/10 minutes and at most 150 g/10 minutes, as measured at 315°C in accordance with ISO 1133, and
(3); the polyarylene sulfide resin composition comprises 100 parts by weight of a polyarylene sulfide resin (A), from 5 to 25 parts by weight of at least one modified ethylene copolymer (B) selected from the group consisting of a copolymer of ethylene, an alkyl ester of an α,β-unsaturated carboxylic acid and maleic anhydride, a copolymer of ethylene and a glycidyl ester of an α,β-unsaturated carboxylic acid, a copolymer of ethylene, a glycidyl ester of an α,β-unsaturated carboxylic acid and vinyl acetate, a copolymer of ethylene, a glycidyl ester of an α,β-unsaturated carboxylic acid and an alkyl ester of an α,β-unsaturated carboxylic acid, and a modified copolymer of ethylene and an α-olefin grafted with maleic anhydride, and from 10 to 120 parts by weight of glass fiber (C).

2. The metal member-polyarylene sulfide resin member composite according to Claim 1, wherein the polyarylene sulfide resin composition further comprises at least one mold release agent (D) selected from the group consisting of a polyethylene wax, a polypropylene wax and a fatty amide wax.

3. The metal member-polyarylene sulfide resin member composite according to Claim 1 or 2, wherein the polyarylene sulfide resin composition further comprises an epoxy resin (E).

4. The metal member-polyarylene sulfide resin member composite according to any one of Claims 1 to 3, wherein the polyarylene sulfide resin composition further comprises glass flake (F).

5. The metal member-polyarylene sulfide resin member composite according to Claim 4, wherein in the polyarylene sulfide resin composition, the ratio (by weight) of glass fiber (C) / glass flake (F) in the polyarylene sulfide resin composition is 1/4 to 4/1, and the total amount of the glass fiber (C) and the glass flake (F) is from 40 to 150 parts by weight per 100 parts by weight of the polyarylene sulfide resin (A).

6. The metal member-polyarylene sulfide resin member composite according to any one of Claims 1 to 5, wherein the metal member has a chemically or physically treated surface.

7. A method for producing the metal member-polyarylene sulfide member composite as defined in any one of Claims 1 to 6, by injection molded direct joining of the metal member and the polyarylene sulfide resin member, which comprises placing the metal member in a mold at a mold temperature of at least 130°C, and injecting a melt of the polyarylene sulfide resin composition into the mold under a mold holding pressure of at least 1 MPa to directly produce a composite comprising the metal member and a polyarylene sulfide resin member joined by injection molded direct joining.
